# FASCICULE DE BREVET EUROPEEN

(11) **EP 3 396 267 B1**
(45) Date de publication et mention de la délivrance du brevet: **10.06.2020**
(21) Numéro de dépôt: 18166028.3
(22) Date de dépôt: 06.04.2018
(51) Int. Cl.: F24F 13/14, E06B 7/06, E06B 9/17, F24F 11/30, F24F 110/70

(54) **DISPOSITIF À CLAPET POUR LA RÉGULATION DU DÉBIT D'AIR DANS UNE OUVERTURE**
VENTILVORRICHTUNG FÜR DIE REGULIERUNG DES LUFTDURCHSATZES IN EINER ÖFFNUNG
VALVE DEVICE FOR AIR FLOW CONTROL IN AN OPENING

(30) Priorité: 26.04.2017 FR 1753649
(43) Date de publication de la demande: 31.10.2018
(73) Titulaire: BUBENDORFF SA, 68220 Attenschwiller (FR)
(72) Inventeur: FRITSCH, Thomas, 67800 HOENHEIM (FR)
(74) Mandataire: Cabinet Bleger-Rhein-Poupon

(56) Documents cités:
- EP-A1- 0 327 186
- EP-A2- 1 063 384
- FR-A1- 2 652 106

## Description

La présente invention concerne très généralement le domaine de la ventilation de bâtiments, notamment mais non exclusivement en association avec des volets roulants. La ventilation impliquant la gestion d'orifices de passage de l'air depuis et vers le bâtiment, ce sont plus spécifiquement les menuiseries de portes et fenêtres ou les caissons et coffres des volets roulants qui sont concernés dans le cas d'une telle association.

L'invention s'avère particulièrement intéressante et bien adaptée à la rénovation, pour laquelle elle permet une mise à niveau autant technique que normative de maisons individuelles, de logements d'habitation ou de bâtiments collectifs, en vue d'y améliorer la qualité de l'air intérieur.

Les normes actuelles imposent de ventiler en permanence les espaces résidentiels, et des circuits de circulation d'air doivent par conséquent être assurés dans les locaux d'habitation en vue de générer des échanges de flux d'air entre l'intérieur et l'extérieur. Dans les locaux plus anciens, des passages d'air sont en général à minima prévus au moins dans les parties considérées comme humides ou donnant lieu à humidité comme les pièces sanitaires (salles de bain, toilettes) ou les cuisines. Les flux sont alors par exemple gérés par une ventilation mécanique contrôlée (VMC) extrayant l'air humide des locaux.

Des configurations plus récentes prévoient des possibilités d'échange d'air également dans les pièces à vivre. Le contrôle des débits extraits peut alors se faire par des moyens à débit variable qui, selon leur réglage, autorisent un volume d'air plus ou moins important à passer par des ouïes mettant en relation des espaces intérieurs délimités (des pièces de l'habitation) avec l'extérieur. En particulier, selon l'hygrométrie d'une pièce - qui témoigne d'une présence humaine et par conséquent d'une nécessité de renouvellement d'air - il existe des solutions faisant varier la surface de passage de l'air proportionnellement au taux d'humidité mesuré. Ces solutions sont supposées ajuster le volume de renouvellement d'air au niveau d'occupation des locaux. Les variations sont cependant d'amplitudes limitées, par exemple obtenues par déformation de membranes sous l'effet des conditions hygrométriques.

De fait, c'est à cette problématique du volume variable de flux d'air échangés que s'applique l'invention, qui a trait à un système de clapet apte à faire varier un débit d'air par déplacement relativement à une ouverture, en vue de participer à une gestion individuelle et éventuellement collective des flux pour optimiser le traitement de l'air à l'échelle d'un local d'habitation résidentielle.

Plus précisément, si la fonction principale de l'invention consiste à gérer des débits d'air échangés entre l'intérieur et l'extérieur d'un bâtiment, les problématiques qui sont sous-jacentes au traitement de l'air dans l'habitat couvrent un spectre relativement plus large, et concernent de multiples paramètres. Ainsi, la simple gestion du débit des flux peut être envisagée à l'aune du respect de seuils normatifs ou pour s'ajuster à des critères saisonniers caractérisés par des températures extérieures ou un taux d'ensoleillement variables, pour répondre à des taux de CO₂ ou d'humidité de l'air à l'intérieur des pièces etc. La gestion des flux d'air peut par ailleurs être pensée individuellement, à l'échelle de chaque lieu de passage d'air, ou s'effectuer en réseau notamment en vue de mutualiser des informations ou d'influer sur les pertes de charge dans le circuit de circulation d'air. La gestion de l'air peut enfin également être liée à l'existence d'une ventilation mécanique par insufflation (VMI), et prendre en compte des flux d'air éventuellement rafraîchis ou réchauffés selon les conditions climatiques locales du moment, sachant que les incidences sur le fonctionnement liées à une VMI sont indépendantes de celles qui résultent des mesure de la qualité de l'air intérieur et doivent être envisagées en sus de ces dernières.

Bien que l'invention soit centrée sur le clapet proprement dit, organisant *in fine* la régulation du débit d'air, elle doit pouvoir être utilisable dans tout type d'environnement, couplée à des moyens de mesure ou de contrôle reflétant des protocoles de fonctionnement divers tels que par exemple décrits dans le document EP 3 075 944 du déposant. De manière générale, le dispositif de l'invention est conçu pour fonctionner pour évacuer de l'air (par exemple avec une VMI) comme pour renouveler de l'air (en coopération avec une VMC), c'est-à-dire qu'il peut être utilisé quel que soit le sens de passage du flux d'air géré.

Le type de clapet concerné par l'invention combine en fait une fonction de régulation du débit d'air et une fonction anti-retour dans le sens inverse, pour empêcher que des phénomènes parasites non contrôlables du type rafales de vent ne perturbent la gestion contrôlée des flux. Dans les configurations connues, ces deux fonctions sont mises en œuvre de façon indépendante, ce qui implique en général un double mécanisme et le cas échéant une double commande, alourdissant sensiblement la complexité technique de l'ensemble. Ce mécanisme double s'avère au surplus économiquement plus onéreux à la fabrication autant qu'à l'entretien, la complexité accrue des systèmes ayant des conséquences inévitables sur leur fiabilité.

Le document EP-A-1063384 propose un dispositif à clapet pour la régulation du débit d'air dans une ouverture de passage de l'air pratiquée dans une paroi, comportant un clapet comprenant une partie rigide et une articulation en forme de film. La présente invention remédie à ces insuffisances, en proposant une configuration de clapet originale qui permet d'abord une régulation des débits modulable, et qui intègre ensuite en une unique solution combinée le réglage du débit et la fonction anti-retour. La solution de l'invention est mécaniquement simple et élégante, et techniquement robuste.

Pour remplir ces objectifs, le dispositif à clapet de l'invention, permettant la régulation du débit d'air dans une ouverture de passage de l'air pratiquée dans une paroi, comporte un clapet classiquement disposé sur une face de la paroi au débouché de l'ouverture, et est tel que ledit clapet comporte un support rigide pivotable selon un premier axe parallèle et voisin de ladite face entre deux positions par rapport à l'ouverture, le support coopérant avec un film de dimensions aptes à obstruer l'ouverture dans la paroi, ledit film étant pivotable indépendamment du support selon un axe parallèle et voisin ou identique au premier axe entre une position au contact du support et une position d'obstruction de l'ouverture.

Le film est en fait prévu, et cela concerne notamment les propriétés du matériau qui le constitue, pour qu'il puisse se déplacer facilement entre les deux positions selon la direction des flux d'air en provenance de l'intérieur ou de l'extérieur, en vue d'être plaqué alternativement contre l'ouverture dont le dispositif de l'invention régule le débit et contre le support. En pratique, le film utilisé est fin et léger, en feuille, de sorte qu'il est particulièrement sensible aux différentiels de pression qui lui sont appliqués. Ainsi, en fonctionnement d'évacuation d'air vicié, si une surpression contraire par exemple due à une saute de vent apparaît, le film est repoussé au contact de la paroi de l'ouverture, aboutissant à l'obstruer. Dans ce cas, le flux d'air extérieur parasite est empêché de rentrer vers l'intérieur des locaux.

Le film est donc utilisé dans les deux fonctions mentionnées auparavant, la régulation de débit et l'anti-retour, contribuant à la simplicité de la solution. En pratique, c'est une partie du clapet de régulation même, obéissant d'ailleurs à la même logique cinématique, qui réalise la fonction anti-retour, aboutissant à simplifier considérablement la structure du clapet.

De préférence, le support 3 est constitué d'un cadre ajouré, le film reposant simplement sur ledit cadre et obstruant au moins partiellement un ou plusieurs ajours pratiqués dans le cadre. La structure de l'ensemble est en l'espèce simplifiée à l'extrême, puisque le film n'a même pas besoin de liaison mécanique au cadre : il se contente de reposer sur ce dernier.

De préférence encore, l'axe de pivotement du support est placé, dans une paroi d'allure verticale, sous le débouché de l'ouverture dans la face de la paroi en regard du clapet. Cette configuration permet de tirer profit de la gravité en particulier dans la position de fonctionnement « normale » du dispositif, permettant la régulation d'air. Dans ce cas, en effet, le support du clapet est incliné par rapport à la face en regard de la paroi et le film peut dès lors reposer par gravité sur ledit support sans solidarisation mécanique à ce dernier. Le support et/ou les moyens d'articulation peuvent alors comporter des moyens de rétention du film en partie inférieure.

Alternativement, l'axe de pivotement du support peut évidemment être placé, dans la paroi d'allure verticale, au-dessus du débouché de l'ouverture. Le dispositif peut même comporter des moyens de rappel du film au contact du support de sorte que lors de l'évacuation de l'air vicié, en fonctionnement « normal » du clapet, il soit au contraire plaqué contre le support, et constitue avec lui - au moins vu par le circuit de régulation hydraulique - un obstacle dont la surface est en réalité celle du film, qui excède celle du support. L'effort de rappel est alors prévu à la mesure des caractéristiques mentionnées auparavant pour le film, et est en l'occurrence faible. On a vu que ces moyens de rappel ne sont pas indispensables, certaines configurations les rendant inutiles.

Selon une variante à la configuration selon laquelle le film est simplement déposé dans un cadre, le film peut être réalisé en matériau flexible et solidarisé à la paroi selon l'axe de pivotement et au voisinage de l'ouverture. Son caractère flexible le rend mobile, sous l'effet des différentiels de pression existant d'un côté à l'autre de l'ouverture, entre une position au contact de la paroi, et une position au contact du support. Le pivotement intervient de fait au niveau de la « ligne » de solidarisation du film à la paroi, c'est en réalité une flexion, assimilable en l'occurrence à un pivotement. Cette solution s'accommode en pratique aussi bien d'un axe de pivotement situé sous ou au-dessus de l'ouverture, et elle ne nécessite pas non plus de moyens de rappel.

Pour satisfaire le caractère permanent des transferts de flux, et en particulier du renouvellement de l'air vicié imposé par les contraintes normatives, le dispositif de l'invention comporte des moyens d'articulation du support entre deux butées délimitant l'amplitude du pivotement et modulant la surface de passage de l'air entre deux valeurs non nulles. Ces deux valeurs définissent un débit minimal et un débit maximal, le réglage correspondant au débit minimal étant de préférence au moins égal au débit sanitaire normatif prévu par les textes. Celui-ci s'avérant souvent insuffisant pour assurer un « nettoyage » correct de l'air vicié, la position correspondant au débit maximal permet une surventilation souvent souhaitable, en termes de santé.

Le dispositif de l'invention comporte des moyens de réglage de la position d'au moins une des butées de manière à modifier l'amplitude du pivotement du clapet. Un réglage différent peut en effet être appliqué selon les locaux, voire dans les mêmes locaux pour diverses situations notamment liées à des considérations climatiques ou saisonnières.

De fait, le support et son mécanisme d'articulation peuvent être configurés de sorte que le film y soit guidé latéralement lors de tout déplacement entre une première position au contact du support et une seconde position d'obstruction de l'ouverture pratiquée dans la paroi. Plus précisément, selon l'invention, les moyens d'articulation peuvent présenter de part et d'autre du support des surfaces perpendiculaires à l'axe de pivotement, notamment aptes au guidage du support et du film au cours de leurs déplacements.

Selon une configuration possible, les moyens d'articulation peuvent comporter des oreilles dépassant perpendiculairement de la paroi de part et d'autre de l'ouverture, présentant chacune un orifice pour le logement à pivotement d'un ergot du support et des lumières curvilignes de guidage d'un plot selon un secteur angulaire, l'ergot et le plot dépassant symétriquement de chaque côté du support. Les lumières curvilignes définissent en pratique l'amplitude du pivotement, selon le secteur angulaire couvert. Elles sont positionnées de manière telles que leurs extrémités, formant butée mécanique au cours du déplacement, définissent deux positions d'ouvertures distinctes du clapet.

Notamment pour des raisons de simplification dans l'industrialisation autant que dans l'utilisation le support peut être prévu d'allure rectangulaire, l'axe de pivotement étant alors par exemple localisé au niveau d'un grand côté du rectangle du support. Les ergots précités peuvent alors être remplacés par un arbre constituant notamment ledit grand côté et dépassant du support à ses deux extrémités.

Dans ce cas, si l'on considère un axe de pivotement situé au niveau du chant rectiligne inférieur du support rectangulaire, sous l'ouverture pratiquée dans la paroi, les deux oreilles sont situées verticalement de part et d'autre du support et de l'ouverture. Les oreilles, dès lors placées de chaque côté du support et formant en quelque sorte des parois latérales quelle que soit la position dudit support, peuvent aider à guider le pivotement du film entre une position plaquée contre le support et une position plaquée contre la paroi. C'est également le cas si l'axe de pivotement est placé au-dessus de l'ouverture.

Selon une structure alternative au cadre ajouré, le support peut comporter un cadre entourant une plaque centrale sur au moins une partie de sa périphérie, ladite plaque ne recouvrant pas la totalité de la surface du film.

De préférence, le déplacement du support est actionné par des moyens d'entraînement motorisés. Il peut s'agir d'un moteur électrique par exemple placé sur une carte électronique gérant en même temps la connexion avec une source d'énergie fournissant son alimentation. Ces moyens d'entraînement peuvent être pilotés par une unité de contrôle électronique reliée aux moyens d'entraînement et à au moins un capteur de mesure d'un paramètre reflétant la qualité de l'air. Ils peuvent également optionnellement assurer, outre la commande de l'activation/désactivation des moyens d'entraînement en fonction des valeurs mesurées, des fonctions annexes telles que la communication avec d'autres dispositifs homologues dans l'hypothèse où le dispositif à clapet de l'invention fonctionne en réseau dans le cadre d'un habitat résidentiel.

Selon une configuration possible, chaque capteur est prévu pour mesurer le taux de CO₂ et/ou d'humidité dans l'air intérieur. Le choix du capteur peut à cet égard dépendre de considérations techniques ou économiques.

L'invention concerne par ailleurs secondairement un volet à tablier roulant comportant un coffre d'enroulement doté d'un dispositif à clapet selon la description qui précède, une paroi verticale du coffre étant alors munie d'une ouverture devant laquelle ledit dispositif à clapet est monté. Elle peut aussi être mise en œuvre en l'absence de volets roulants, sur une menuiserie de fenêtre ou de porte sur laquelle on monte un dispositif à clapet selon les caractéristiques mentionnées auparavant, devant une ouverture pratiquée dans une traverse du dormant, par exemple la traverse supérieure.

Dans tous les cas, l'idée à la base de la conception de l'invention est de fournir un clapet de préférence motorisé, et par conséquent contrôlable par une unité de pilotage électronique, déplaçable entre un débit minimal et un débit maximal, le passage de l'un à l'autre se faisant lorsqu'un seuil d'au moins un paramètre de mesure de qualité de l'air est atteint.

C'est donc un fonctionnement binaire qui est de préférence mis en œuvre, au sens de l'invention, avec passage d'un état de fonctionnement à un autre par exemple en termes de débit d'air vicié évacué, dès lors que les mesures intérieures reflètent des modifications de l'état de l'air intérieur entre des valeurs respectivement considérée comme acceptables et nécessitant une surventilation. Il est à noter que le seuil de passage d'un débit à l'autre est fixé indépendamment des normes, le débit sanitaire normatif à respecter étant de préférence celui de l'un des deux états de fonctionnement (débit minimal). L'invention intervient précisément parce que ce débit minimal est considéré comme apportant une réponse insuffisante, dans de nombreuses situations, à la nécessité du renouvellement de l'air intérieur vicié.

L'invention va à présent être décrite plus en détail, en référence aux figures annexées qui représentent un exemple de mise en œuvre non limitatif de l'invention, et pour lesquelles :
- la figure 1 représente un schéma simplifié du fonctionnement du dispositif à clapet de l'invention ;
- la figure 2 montre en vue perspective de face une configuration possible de dispositif à clapet selon l'invention.

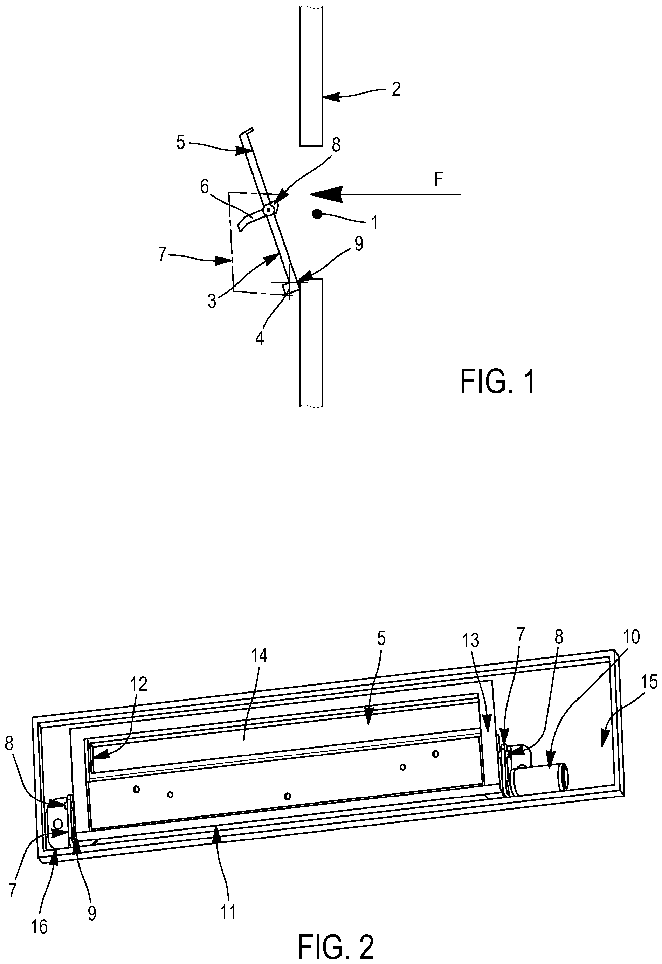

En référence à la figure 1, le dispositif à clapet est placé devant une ouverture 1 pratiquée dans une paroi 2, par exemple une paroi de coffre de volet roulant ou un dormant de menuiserie de fenêtre ou de porte. Une telle ouverture peut par exemple prendre la forme d'une fente d'allure horizontale. Le dispositif comporte un support 3 pivotant via un ergot 9 selon un axe 4 et un film 5 apparaissant plaqué contre ledit support 3 et qui est apte à pivoter indépendamment, selon le même axe 4, entre le support 3 et la paroi 2. Le support 3 pivote entre deux positions extrêmes délimitées par une lumière 6 arrondie pratiquée dans une oreille latérale 7 par exemple fixée à la paroi 2, ou à une paroi intermédiaire solidarisée à la paroi 2 si le dispositif de l'invention est conçu comme une unité indépendante (voir par exemple en figure 2), ce qui est le cas dans la plupart des configurations. Le pivotement s'effectue par coopération des ergots 9 dépassant du support 3 au niveau de l'axe 4 dans des orifices correspondants de chaque oreille 7 latérale. Le support 3 est par exemple un cadre rectangulaire comportant au moins une fenêtre intérieure, comme montré en figure 2, ou encore un cadre crénelé comportant une branche principale du côté de l'axe de pivotement et des branches secondaires d'allure perpendiculaire et en créneaux, maintenant des ouvertures en quelque sorte entre les dents du peigne. Il peut prendre encore d'autres formes, dans la mesure où elles présentent des ouvertures permettant d'assurer la fonction anti-retour lorsque survient un flux inverse de celui qui est normalement géré.

La lumière 6 de guidage est curviligne, délimitant un secteur angulaire marquant l'amplitude du débattement angulaire du support 3 pivotant. Le guidage s'effectue en réalité dans deux oreilles 7 placées de chaque côté du support 3, et munies de lumières 6 symétriques logeant des plots 8 dépassant latéralement dudit support 3. Il permet de conférer au support deux position distinctes, en butée aux extrémités des lumières 6, pour un fonctionnement motorisé par exemple binaire, c'est-à-dire à deux débits prédéterminés d'évacuation de l'air vicié, dans le sens de la flèche F, lorsque le film 5 est plaqué contre le support 3 comme montré en figure 1 dans une position correspondant à un débit minimal. Le fonctionnement est exactement le même dans toutes les hypothèses envisagées, seuls changeant le côté intérieur et le côté extérieur par exemple dans les deux fonctionnements basés sur une VMI et sur une VMC. Ainsi, dans ce dernier cas, le clapet est dirigé vers l'intérieur de la pièce, alors que dans l'hypothèse d'une VMI, il est dirigé vers l'extérieur, ou vers l'intérieur d'un caisson de volet dans le cas d'une association de l'invention avec un volet roulant.

Le film 5 est lui-même pivotable par rapport au support 3, et apte à obstruer l'ouverture 1 dans l'hypothèse d'une surpression en sens inverse de la flèche F, par exemple en cas de coup de vent dans un fonctionnement destiné à l'évacuation d'air vicié.

En fonctionnement du clapet visant à réguler le débit d'évacuation d'air, il est plaqué contre le support, comme montré aux figures 1 et 2, de préférence par simple gravité comme illustré sur les figures, selon la disposition du clapet et notamment de son axe de rotation par rapport à l'ouverture 1. Le film étant prévu en un matériau très léger, par exemple en plastique flexible d'épaisseur très réduite, il peut également être fixé en bordure de l'ouverture 1, au niveau de l'axe 4. Sa flexion par rapport à cette zone de fixation presque linéaire est alors assimilable à un pivotement d'axe 4.

Dans la configuration motorisée apparaissant en figure 2, un moteur électrique 10 est placé en bout d'un arbre prolongeant un côté 11 d'un cadre 13 formant le support 3. Le film 5 apparaît dans une fenêtre 12 pratiquée à l'intérieur du cadre 13, de sorte à pouvoir obstruer une ouverture 14 pratiquée dans une plaque 15 qui supporte l'ensemble du dispositif à clapet de l'invention, dans lequel l'ouverture 14 est située en face du film 5. Dans la configuration présentée en figure 2, le dispositif à clapet de l'invention est envisagé comme une unité indépendante solidarisable à une paroi 2 par exemple dotée d'une fente d'aération constituant l'ouverture 1. L'ouverture 14 doit alors être centrée sur ladite fente. Le film 5 repose sans contrainte, sinon la gravité, dans le cadre 13, et un flux inverse traversant la ou les fenêtres 12 du cadre 13 aboutit à le faire naturellement pivoter autour d'un axe au voisinage de l'axe 4, en direction de la paroi 2.

De part et d'autre du cadre 13 sont fixées à la plaque 15 des équerres 16 dont une branche d'allure perpendiculaire à ladite plaque 15 constitue les oreilles 7 munies des lumières 6 curvilignes de guidage du support 3. Des plots 8 dépassant au niveau côtés latéraux du cadre 13 coopèrent avec lesdites lumières 6 en vue du déplacement motorisé du support 3, et par conséquent du film 5 dans la plupart des hypothèses, entre deux positions de fonctionnement assurant deux débits distincts d'évacuation de l'air vicié ou d'ouverture à de l'air frais. Ces positions correspondent à l'arrivée en butée des plots 8 aux extrémités des secteurs angulaires des lumières 6.

Compte tenu que l'un des fonctions principales de l'invention est l'évacuation d'air vicié, la description précédente a donné comme exemple la gestion des flux d'air vers l'extérieur. Dans une perspective inversée, par exemple pour aider au rafraichissement ou au réchauffement des locaux à l'aide d'air extérieur, le dispositif de l'invention peut cependant être utilisé pour gérer des flux d'air contraires. Dans cette hypothèse, les clapets pourront optimiser les flux d'air neuf en réduisant les pertes de charge aérauliques au niveau des sorties d'air dans les pièces non polluées. Une telle possibilité implique évidemment la mise en œuvre d'une communication entre dispositifs, et un positionnement des clapets qui n'est pas forcément binaire, mais requiert au moins une troisième position intermédiaire. Un système par exemple à trois positions permet en effet d'optimiser la circulation de l'air à l'intérieur des locaux. Jouer sur la perte de charge dans certaines pièces peut ainsi s'avérer intéressant pour optimiser l'évacuation dans d'autres pièces. On peut par exemple augmenter la perte de charge dans des pièces non polluées pour favoriser la circulation d'air dans d'autres pièces nécessitant un renouvellement d'air.

L'invention ne se limite par ailleurs pas à l'exemple structurel décrit et expliqué en référence aux figures, qui ne doit être considéré que comme une simple illustration non exhaustive de celle-ci. Elle englobe au contraire les variantes notamment de forme entrant dans la portée des revendications.

## Revendications

1. Dispositif à clapet pour la régulation du débit d'air dans une ouverture 1 de passage de l'air pratiquée dans une paroi, comportant un clapet disposé sur une face de la paroi 2 au débouché de l'ouverture 1, ledit clapet comportant un support 3 rigide pivotable selon un premier axe 4 parallèle et voisin de ladite face entre deux positions par rapport à l'ouverture 1, le support 3 coopérant avec un film 5 de dimensions aptes à obstruer l'ouverture 1 dans la paroi 2, ledit film 5 étant pivotable indépendamment du support 3 selon un axe parallèle et voisin ou identique au premier axe 4 entre une position au contact du support 3 et une position d'obstruction de l'ouverture 1.

2. Dispositif à clapet pour le contrôle du passage de l'air dans une paroi 2 selon la revendication précédente, **caractérisé en ce que** le support 3 est constitué d'un cadre 13 ajouré, le film reposant sur ledit cadre 13 et obstruant au moins partiellement un ou plusieurs ajours 12 pratiqués dans le cadre.

3. Dispositif à clapet pour le contrôle du passage de l'air dans une paroi 2 selon l'une des revendications précédentes, **caractérisé en ce que** l'axe 4 de pivotement du support 3 est placé, dans une paroi d'allure verticale, sous le débouché de l'ouverture 1 dans la face de la paroi 2 en regard du clapet.

4. Dispositif à clapet pour le contrôle du passage de l'air dans une paroi 2 selon l'une des revendications précédentes, **caractérisé en ce que** le film est réalisé en matériau flexible et solidarisé à la paroi selon l'axe de pivotement 4 et au voisinage de l'ouverture 1.

5. Dispositif à clapet pour le contrôle du passage de l'air dans une paroi 2 selon l'une des revendications précédentes, **caractérisé en ce qu'**il comporte des moyens d'articulation du support 3 entre deux butées délimitant l'amplitude du pivotement et modulant la surface de passage de l'air entre deux valeurs non nulles.

6. Dispositif à clapet pour le contrôle du passage de l'air dans une paroi 2 selon la revendication précédente, **caractérisé en ce qu'**il comporte des moyens de réglage de la position d'au moins une des butées.

7. Dispositif à clapet pour le contrôle du passage de l'air dans une paroi selon l'une des revendications précédentes, **caractérisé en ce que** les moyens d'articulation présentent de part et d'autre du support 3 des surfaces perpendiculaires à l'axe 4 de pivotement aptes au guidage du support 3 et du film 5 au cours de leurs déplacements.

8. Dispositif à clapet pour le contrôle du passage de l'air dans une paroi 2 selon la revendication précédente, **caractérisé en ce que** les moyens d'articulation comportent des oreilles 7 dépassant perpendiculairement de la paroi 2 de part et d'autre de l'ouverture 1, présentant chacune un orifice pour le logement à pivotement d'un ergot 9 du support 3 et des lumières 6 curvilignes de guidage d'un plot 8 selon un secteur angulaire, l'ergot 9 et le plot 8 dépassant symétriquement de chaque côté du support 3.

9. Dispositif à clapet pour le contrôle du passage de l'air dans une paroi 2 selon l'une des revendications précédentes, **caractérisé en ce que** le support 3 est d'allure rectangulaire, l'axe 4 de pivotement étant localisé au niveau d'un grand côté du rectangle du support 3.

10. Dispositif à clapet pour le contrôle du passage de l'air dans une paroi 2 selon l'une des revendications précédentes, **caractérisé en ce que** le déplacement du support 3 est actionné par des moyens d'entraînement 10 motorisés.

11. Dispositif à clapet pour le contrôle du passage de l'air dans une paroi 2 selon la revendication précédente, **caractérisé en ce que** les moyens d'entraînement 10 sont pilotés par une unité de contrôle électronique reliée aux moyens d'entraînement 10 et à au moins un capteur de mesure d'un paramètre reflétant la qualité de l'air.

12. Dispositif à clapet pour le contrôle du passage de l'air dans une paroi 2 selon la revendication précédente, **caractérisé en ce que** chaque capteur mesure le taux de CO₂ et/ou d'humidité dans l'air intérieur.

13. Volet roulant comportant un coffre d'enroulement d'un tablier doté d'un dispositif à clapet selon les revendications précédentes, une paroi verticale du coffre étant munie d'une ouverture 1 devant laquelle le dispositif à clapet est monté.

14. Menuiserie de fenêtre ou de porte comportant un dispositif à clapet selon les revendications 1 à 12 monté devant une ouverture 1 pratiquée dans une traverse du dormant de ladite menuiserie.

## Patentansprüche

1. Ventilvorrichtung für die Regulierung des Luftdurchsatzes in einer Öffnung 1 zum Durchgang von Luft, die in einer Wand durchgeführt ist, umfassend ein Ventil, das auf einer Seite der Wand 2 an der Einmündung der Öffnung 1 angeordnet ist, wobei das Ventil einen starren Träger 3 umfasst, der gemäß einer ersten Achse 4 parallel und benachbart zu der Seite zwischen zwei Positionen mit Bezug auf die Öffnung 1 schwenkbar ist, wobei der Träger 3 mit einem Film 5 mit Abmessungen zusammenarbeitet, die geeignet sind, um die Öffnung 1 in der Wand 2 zu versperren, wobei der Film 5 unabhängig vom Träger 3 gemäß einer Achse parallel und benachbart zu oder identisch mit der ersten Achse 4 zwischen einer Position im Kontakt mit dem Träger 3 und einer Position des Versperrens der Öffnung 1 schwenkbar ist.

2. Ventilvorrichtung für die Regulierung des Luftdurchgangs in einer Wand 2 nach dem vorhergehenden Anspruch, **dadurch gekennzeichnet, dass** der Träger 3 aus einem durchbrochenen Rahmen 13 besteht, wobei der Film auf dem Rahmen 13 ruht und mindestens teilweise eine oder mehrere durchbrochene Stelle(n) 12 versperrt, die im Rahmen angebracht sind.

3. Ventilvorrichtung für die Regulierung des Luftdurchgangs in einer Wand 2 nach einem der vorhergehenden Ansprüche, **dadurch gekennzeichnet, dass** die Schwenkachse 4 des Trägers 3 in einer Wand mit vertikalem Verlauf unter der Einmündung der Öffnung 1 in die Seite der Wand 2 gegenüber dem Ventil platziert ist.

4. Ventilvorrichtung für die Regulierung des Luftdurchgangs in einer Wand 2 nach einem der vorhergehenden Ansprüche, **dadurch gekennzeichnet, dass** der Film aus einem flexiblen Material hergestellt und fest mit der Wand gemäß der Schwenkachse 4 und benachbart der Öffnung 1 verbunden ist.

5. Ventilvorrichtung für die Regulierung des Luftdurchgangs in einer Wand 2 nach einem der vorhergehenden Ansprüche, **dadurch gekennzeichnet, dass** sie Mittel zur gelenkigen Verbindung des Trägers 3 zwischen zwei Anschlägen umfasst, die die Amplitude des Schwenkens begrenzen und die Fläche des Luftdurchgangs zwischen zwei Werten verschieden von null modulieren.

6. Ventilvorrichtung für die Regulierung des Luftdurchgangs in einer Wand 2 nach dem vorhergehenden Anspruch, **dadurch gekennzeichnet, dass** sie Mittel zur Einstellung der Position mindestens eines der Anschläge umfasst.

7. Ventilvorrichtung für die Regulierung des Luftdurchgangs in einer Wand nach einem der vorhergehenden Ansprüche, **dadurch gekennzeichnet, dass** die Mittel zur gelenkigen Verbindung auf beiden Seiten des Trägers 3 Flächen senkrecht zur Schwenkachse 4 aufweisen, die zur Führung des Trägers 3 und des Films 5 im Laufe ihrer Verschiebungen geeignet sind.

8. Ventilvorrichtung für die Regulierung des Luftdurchgangs in einer Wand 2 nach dem vorhergehenden Anspruch, **dadurch gekennzeichnet, dass** die Mittel zur gelenkigen Verbindung Laschen 7 umfassen, die senkrecht die Wand 2 auf beiden Seiten der Öffnung 1 überragen und jeweils ein Loch für die schwenkende Aufnahme eines Vorsprungs 9 des Trägers 3 und krummlinige Durchlässe 6 zur Führung eines Kontakts 8 gemäß einem Winkelsektor aufweisen, wobei der Vorsprung 9 und der Kontakt 8 symmetrisch jede Seite des Trägers 3 überragen.

9. Ventilvorrichtung für die Regulierung des Luftdurchgangs in einer Wand 2 nach einem der vorhergehenden Ansprüche, **dadurch gekennzeichnet, dass** der Träger 3 einen rechtwinkligen Verlauf aufweist, wobei sich die Schwenkachse 4 auf der Ebene einer großen Seite des Rechtecks des Trägers 3 befindet.

10. Ventilvorrichtung für die Regulierung des Luftdurchgangs in einer Wand 2 nach einem der vorhergehenden Ansprüche, **dadurch gekennzeichnet, dass** die Verschiebung des Trägers 3 durch motorisierte Antriebsmittel 10 betätigt wird.

11. Ventilvorrichtung für die Regulierung des Luftdurchgangs in einer Wand 2 nach dem vorhergehenden Anspruch, **dadurch gekennzeichnet, dass** die Antriebsmittel 10 durch eine elektronische Steuereinheit geleitet werden, die mit den Antriebsmitteln 10 und mit mindestens einem Sensor zur Messung eines Parameters verbunden sind, der die Qualität der Luft wiederspiegelt.

12. Ventilvorrichtung für die Regulierung des Luftdurchgangs in einer Wand 2 nach dem vorhergehenden Anspruch, **dadurch gekennzeichnet, dass** jeder Sensor den Gehalt von CO₂ und/oder Feuchtigkeit in der Innenluft misst.

13. Rollladen, umfassend einen Kasten zum Aufrollen einer Abdeckung, die mit einer Ventilvorrichtung nach den vorhergehenden Ansprüchen dotiert ist, wobei eine vertikale Wand des Kastens mit einer Öffnung 1 ausgestattet ist, vor der die Ventilvorrichtung montiert ist.

14. Fenster- oder Türrahmen, umfassend eine Ventilvorrichtung nach Anspruch 1 bis 12, die vor einer Öffnung 1 montiert ist, die in einem Querträger des Zargenrahmens des Rahmens durchgeführt ist.

## Claims

1. A valve device for regulating the air flow rate in an air passage opening 1 formed in a wall, including a valve positioned on a face of the wall 2 at the mouth of the opening 1, said valve including a rigid support 3 pivotable along a first axis 4 parallel and adjacent to said first face between two positions relative to the opening 1, the support 3 cooperating with a film 5 having dimensions able to obstruct the opening 1 in the wall 2, said film 5 being pivotable independently of the support 3 along an axis parallel and adjacent or identical to the first axis 4 between a position in contact with the support 3 and a position obstructing the opening 1.

2. The valve device for controlling the passage of air in a wall 2 according to the preceding claim, **characterized in that** the support 3 is made up of an open-worked frame 13, the film resting on said frame 13 and at least partially obstructing one or several holes 12 made in the frame.

3. The valve device for controlling the passage of air in a wall 2 according to one of the preceding claims, **characterized in that** the pivot axis 4 of the support 3 is placed, in a vertical wall, below the mouth of the opening 1 in the face of the wall 2 facing the valve.

4. The valve device for controlling the passage of air in a wall 2 according to one of the preceding claims, **characterized in that** the film is made from flexible material and secured to the wall along the pivot axis 4 and in the vicinity of the opening 1.

5. The valve device for controlling the passage of air in a wall 2 according to one of the preceding claims, **characterized in that** it includes means for articulating the support 3 between two stops delimiting the amplitude of the pivoting and modulating the air passage surface between two non-nil values.

6. The valve device for controlling the passage of air in a wall 2 according to the preceding claim, **characterized in that** it includes means for adjusting the position of at least one of the stops.

7. The valve device for controlling the passage of air in a wall according to one of the preceding claims, **characterized in that** the articulation means have, on either side of the support 3, surfaces perpendicular to the pivot axis 4 that are capable of guiding the support 3 and the film 5 during their movements.

8. The valve device for controlling the passage of air in a wall 2 according to the preceding claim, **characterized in that** the articulation means include lugs 7 protruding perpendicularly from the wall 2 on either side of the opening 1, each having an orifice for pivotably housing a fin 9 of the support 3 and curved apertures 6 for guiding a stud 8 over an angular sector, the fin 9 and the stud 8 protruding symmetrically on each side of the support 3.

9. The valve device for controlling the passage of air in a wall 2 according to one of the preceding claims, **characterized in that** the support 3 is rectangular, the pivot axis 4 being located at a large side of the rectangle of the support 3.

10. The valve device for controlling the passage of air in a wall 2 according to one of the preceding claims, **characterized in that** the movement of the support 3 is actuated by motorized driving means 10.

11. The valve device for controlling the passage of air in a wall 2 according to the preceding claim, **characterized in that** the driving means 10 are controlled by an electronic control unit coupled to the driving means 10 and to at least one sensor for measuring a parameter reflecting the quality of the air.

12. The valve device for controlling the passage of air in a wall 2 according to the preceding claim, **characterized in that** each sensor measures the CO₂ and/or humidity level in the indoor air.

13. A rolling vehicle including a box for winding an apron provided with a valve device according to the preceding claims, a vertical wall of the box being provided with an opening 1 in front of which the valve device is mounted.

14. Window or door joinery including a valve device according to claims 1 to 12, mounted in front of an opening 1 made in a rail of the frame of said joinery.
